**Europäisches Patentamt**

(19) **European Patent Office**

**Office européen des brevets**

(11) Publication number : **0 411 802 B1**

## (12) EUROPEAN PATENT SPECIFICATION

(45) Date of publication of patent specification :
**22.06.94 Bulletin 94/25**

(51) Int. Cl.[5] : **G01F 23/00,** G01F 23/16,
G01M 3/32

(21) Application number : **90307991.1**

(22) Date of filing : **20.07.90**

(54) **A method and apparatus for detecting changes in the liquid level of a storage tank.**

(30) Priority : **25.07.89 US 384612**

(43) Date of publication of application :
**06.02.91 Bulletin 91/06**

(45) Publication of the grant of the patent :
**22.06.94 Bulletin 94/25**

(84) Designated Contracting States :
**BE DE FR GB IT NL**

(56) References cited :
**CH-A- 607 011**
**GB-A- 2 081 900**
**US-A- 4 893 498**

(73) Proprietor : **MOBIL OIL CORPORATION**
**3225 Gallows Road**
**Fairfax, Virginia 22037-0001 (US)**

(72) Inventor : **Jensen, Jay Edward**
**811 Lynwood Street**
**Raritan, New Jersey 08869 (US)**

(74) Representative : **Colmer, Stephen Gary et al**
**European Office of Patent Counsel**
**Mobil House**
**54-60 Victoria Street**
**London SW1E 6QB (GB)**

## Description

The present invention relates to a method and apparatus for detecting changes in the liquid level of a storage tank and, more particularly, to a leak detector capable of detecting volatile liquid leaks from a large above-ground storage tank with exceptional accuracy.

Liquid products, particularly petroleum-based products, are often stored in very large quantities in above-ground tanks. One concern with such tanks is the possibility that the tank may develop a leak which is not readily discernable through normal methods of inventory control or visual inspection. Significant environmental concerns arise with leaks which are relatively minor when viewed over a short period of time. Such leaks, when left undetected and unrepaired, often result in very substantial leakage over a long period of time.

The problem of leak detection becomes even more acute as the size of the storage tank increases since, as may be envisioned, minor leakage from such tanks will cause only a small change in the level of the liquid in storage. This is particularly true in tanks greater than 6m (20 feet) in diameter. Also, in above-ground tanks, changes in ambient conditions, such as temperature and wind, can affect the level of the liquid in the tank.

A common practice used in industry for assessing above-ground storage tank integrity is to empty the tank of its volatile contents, re-fill the tank with water to a level of at least 1.8m (6 feet) to provide sufficient head pressure and use visual detection of liquid level variations through a sight glass outside of the tank to measure for possible leaks. As may be readily envisioned, this technique has several disadvantages. One disadvantage is that the tank must be taken out of service periodically to assess its integrity. Another disadvantage is that the water used to conduct the test must either be disposed of as hazardous waste, as a result of its contacting the interior surfaces of the storage tank, or sent to a waste water treatment plant, a facility rarely present at most locations. However, an even more significant disadvantage involves the concern for test accuracy, since visual detection is limited to about 1.6mm (1/16 inch) variation in liquid level. In a 15m (50 foot) diameter tank, 1.6mm (1/16 inch) equates to a minimum detectable volume in excess of approximately 280l (75 gallons), whereas in a 30m (100 foot) diameter tank, 1.6mm (1/16 inch) equates to a minimum detectable volume in excess of approximately 1135l (300 gallons). Also, changes in temperature, which can cause the liquid in the tank to expand or contract, can significantly affect the measurement as can wind effects and sight glass meniscus resolution.

Another technique which has been considered is to place a pressure transducer adjacent to the bottom of the tank to measure the pressure of the liquid at the bottom of the tank. This technique is not affected by changes in temperature since, although the volume of the liquid may change due to liquid expansion, its weight does not change. This technique has the problem that it requires a pressure transducer that can not only measure the heavy weight of the liquid in the tank, but which can also measure slight variations in the weight. Such a transducer is either not readily available or is prohibitively expensive.

Swiss Patent No. 607,011 discloses a checking device for leakage from large liquid reservoirs and tanks which utilizes a pressure sensitive detector having two chambers separated by a diaphragm. One chamber of the detector is connected to the reservoir and the other to a reference tube. The diaphragm of the pressure sensitive detector can be moved toward a contact member to close an electrical signalling circuit in the event that a leak develops. However, the arrangement disclosed in Swiss Patent No 607,011 would not be expected to have the accuracy required to assure tank integrity in light of today's environmental concerns and regulations.

It would be desirable to have a liquid leak detector capable of accurately detecting small leaks in large above-ground tanks which is not adversely affected by the volatility characteristics of the product being stored or by changes in ambient conditions present during the course of assessing tank integrity.

According to one aspect of the present invention, there is provided apparatus for detecting a change in the amount of liquid in a storage tank, comprising:

(a) a vertical upright standpipe for filling with a liquid to a level that generates a hydrostatic head pressure substantially equivalent to that exerted by the liquid in the storage tank;

(b) means for sensing hydrostatic head pressure differential between the liquid in the storage tank and the liquid in the standpipe to determine a change in the pressure differential resulting from a change in the amount of liquid in the storage tank;

(c) means for connecting said standpipe to said pressure differential sensing means, said standpipe connecting means being substantially horizontally disposed to said standpipe;

(d) means for connecting the storage tank to said pressure differential sensing means, said storage tank connecting means being substantially horizontally disposed to the storage tank; and

(e) an elongated hollow member connected to the standpipe above the liquid level of said standpipe and adapted to be connected to the tank above the level of liquid in the tank;

wherein said standpipe connecting means and said tank connecting means are in substantial axial

2

alignment with each other.

According to a further aspect of the present invention, there is provided a method of detecting liquid leakage from an above-ground tank, comprising the steps of:

(a) connecting a pressure sensing means to the above-ground tank using a tank connecting means substantially horizontally disposed to the tank;

(b) connecting a vertical upright standpipe to the pressure sensing means using a standpipe connecting means substantially horizontally disposed to the standpipe, wherein the standpipe connecting means and the tank connecting means are in substantial axial alignment with each other;

(c) filling the vertical upright standpipe with a liquid to a level that generates a hydrostatic head pressure substantially equivalent to that exerted by the liquid in the storage tank;

(d) connecting the top of the standpipe to the tank above the level of liquid in the tank by way of an elongated hollow member; and

(e) measuring the hydrostatic head pressure differential between the liquid in the storage tank and the liquid in the standpipe through the use of the pressure sensing means to determine a change in the pressure differential caused by leakage of liquid from the tank.

By substantial axial alignment is meant that the horizontal centerlines of the tank connecting means and the standpipe connecting means are substantially coplanar, i.e., reside substantially within the same plane.

The invention will now be more particularly described with reference to the accompanying drawings, in which

Figure 1 is a schematic representation of a liquid leak detector according to one example of the present invention,

Figure 2 is a block diagram of the signal processor of the detector shown in Figure 1, and

Figures 3 through 6 are graphs presenting the results of leak tests made on tanks using the detector of Figure 1.

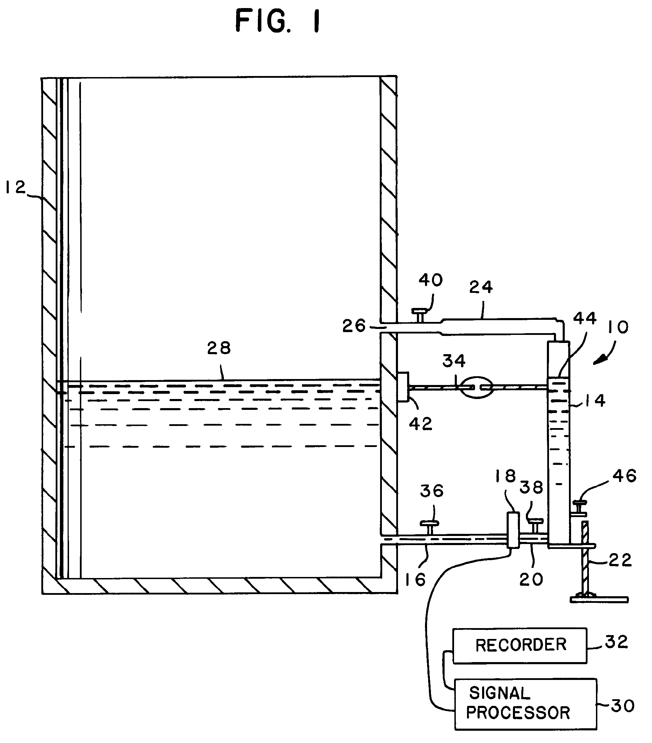

Referring to Figure 1, there is shown a leak detector 10 connected to a cylindrical above-ground tank 12. The leak detector 10 includes an upright cylindrical standpipe 14 which is vertically disposed and axially aligned with tank 12. The positioning of standpipe 14 relative to tank 12 is established and maintained by setting an adjustable jackstand 22 and a support arm 34 equipped with a magnet 42.

A horizontally disposed pipe 16 connects the tank 12 to a pressure transducer 18 by way of a valve 36, while a further horizontally disposed pipe 20 connects the transducer 18 to the standpipe 14 by way of a further valve 38. Valves 36, 38 are installed in the pipes 16, 20 for the purpose of aiding in the installation, calibration and removal of the system.

As is usually the case, pressure transducer 18 prevents the flow of fluid between tank 12 and standpipe 14 and is adapted to measure pressure differentials. In the event that it is desired to establish a fluid flow path for filling the standpipe with the fluid from the tank, a tube or pipe with a valve installed therein (not shown) can be employed to bypass the pressure transducer. A flexible hose 24 is connected between the top of the standpipe 14 and an outlet opening 26 located in the tank 12 at a point above the liquid level 28 in the tank 12.

Pressure transducer 18 is electrically connected to a signal processor 30, which in turn is electrically connected to a recorder 32, which may be a pen recorder, for creating a record of the output of signal processor 30. A recorder found to be suitable for this application is the battery operated Soltec Primeline[R] Model 6723, available from Soltec Corporation of Palo Alto, CA.

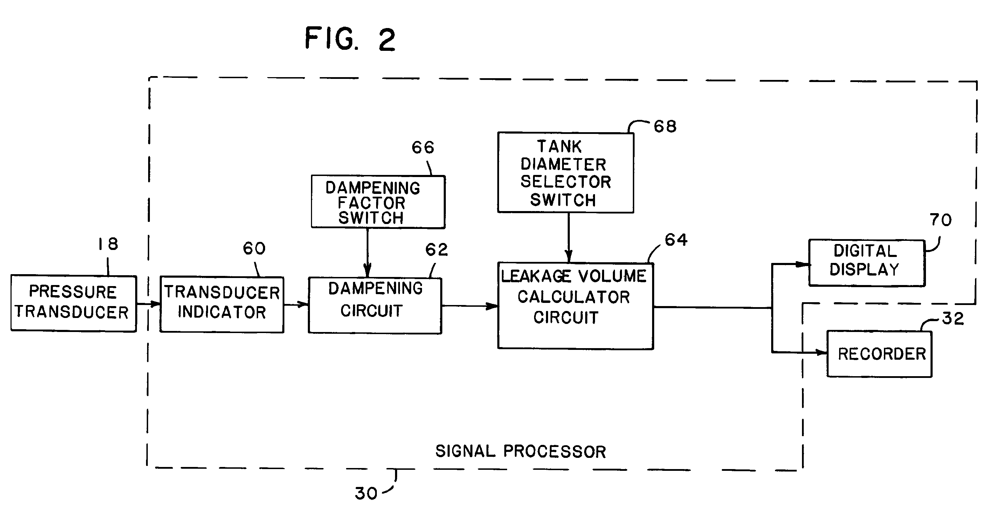

Referring now to Figure 2, the signal processor 30 includes a transducer indicator 60 which receives the electrical output from pressure transducer 18. The preferred transducer indicator is the Validyne CD379 battery operated digital transducer indicator, available from Validyne Engineering Corporation of Northridge, CA. The transducer indicator 60 provides circuitry for transducer excitation and signal conditioning and outputs a DC signal proportional to the pressure differential sensed by pressure transducer 18. The preferred pressure transducer 18 is the Validyne DP-103 liquid to liquid differential pressure transducer capable of resolving differences n the order of 0.001 inches (0.0025cm) of water column. The output from transducer indicator 60 is fed into dampening circuit 62 wherein additional signal conditioning is provided. Additional dampening is required to eliminate or minimize small signal variations caused by wind effects on the tank liquid surface 28 and/or mechanical vibrations. Dampening factor switch 66 is provided so that the degree of dampening is adjustable. This feature can be advantageously utilized to adjust for the severity of prevailing weather conditions.

The output of dampening circuit 62 is fed into the leakage volume calculator circuit 64. As those skilled in the art will readily understand, to convert a differential pressure reading into a volumetric value, the crossectional area of the tank being tested must be inputed. This is done through the use of tank diameter selector switch 68. The output from the leakage volume calculator circuit is then fed simultaneously into a digital display 70 and into recorder 32.

3

To operate the leak detector of the present invention, the system is installed as shown in Figure 1, with the pipe 16 placed as close to the bottom of tank 12 as practical. Although standpipe 14 can be plumbed so that it can be filled with the liquid present in tank 12, this is not necessary. As can be appreciated, when installed at a bulk fuel storage terminal, the liquid in tank 12 will generally be a volatile hydrocarbon such as gasoline and, therefore, it may be impractical or undesirable to use such liquid in the standpipe. Therefore, it is preferred that water be used to fill the standpipe, as the use of same greatly reduces problems associated with safety, in general, and volatility. To accomodate winter weather testing, a suitable mixture of antifreeze and water can be formulated and used to fill standpipe 14. For example, a mixture of 50% water and 50% glycol has been successfully used and would be expected to provide adequate performance under virtually all conditions. As can be appreciated, when the liquid in standpipe 14 is different from the liquid present in tank 12, the actual level of liquid 28 in tank 12 will differ from the actual level of liquid 44 in standpipe 14 under conditions when system pressures are balanced. This difference in liquid level between tank 12 and standpipe 14 will be proportional to the difference in the density or specific gravity of the two fluids.

After filling standpipe 14 to the proper level, it is important to assure that air bubbles are not entrained within the standpipe liquid. To minimize this occurrence, a small amount of a household detergent can be added to the liquid to reduce its surface tension Also, drawing a vacuum on the standpipe has been found to aid in the process of air bubble de-entrainment. This can be accomplished by connecting a suitable vacuum pump at the point where wind compensation tube 24 is connected for testing. Valve 38 should be closed during this operation so that the vacuum is not seen at pressure transducer 18. The pump is used to apply a vacuum of approximately 15 inches of mercury (50kPa) to the standpipe for a period of about 2 minutes. During this period, the standpipe can be tapped to aid in the release of bubbles from the liquid. Following this operation, the vacuum pump is removed and valve 38 opened. Air must also be bled from the pipes 16 and 20. This is accomplished through the use of transducer air bleed valves (not shown), which are present on either side of pressure transducer 18. The air bleed valves are opened while a pressure head is applied and liquid flow permitted until no air bubbles are seen to exit via the bleed valves. Upon completing this step, hose 24 is installed between the top of standpipe 14 and outlet opening 26.

Following the removal of air from the system, it will probably be necessary to reestablish the proper standpipe liquid height 44. This is accomplished through the use of pressure transducer 18, signal processor 30 and recorder 32. To adjust the level of liquid 44 in standpipe 14, one end of a piece of flexible tubing is connected to valve 46, the other end to a liquid container. Valve 46 is then opened to establish a low flow rate and the response of the falling liquid head monitored on recorder 32. Pen deflection of recorder 32 will occur as the standpipe liquid head pressure approaches the tank liquid pressure. The container and flexible tube arrangement connected at valve 46 can be raised or lowered to permit flow from or to standpipe 14. When using the signal processor of the preferred embodiment, the arithmetic sign of the displayed leakage volume calculation can be used to determine whether the liquid head of standpipe 14 is greater than or less than that of tank 12. If negative, the standpipe liquid head is greater than that of tank 12, requiring some fluid to be removed, while a positive reading signifies that the standpipe liquid head is less than that of tank 12, requiring that some fluid be added.

Upon balancing the system and calibrating the instrumentation, a tank leak test can be conducted. Valves 36, 38 and 40 are to be opened and remain open for the duration of the test. The tank diameter selection switch 68 should be set to the value closest to the actual diameter of tank 12. The dampening factor switch should initially be set to a mid-range value. (A higher degree of dampening may be necessary in the event of severe wind conditions). With the recorder turned on, at least five gallons (19 l) of liquid should be removed from tank 12 to assure that sufficient recorder resolution exists. Once this is assured, the tank leak test can be begun. Test duration should be at least 4 hours. Longer periods may be required for large diameter tanks.

As can readily be understood, since the level of the liquid 44 in standpipe 14 does not change during the course of the test, small changes in the level of the liquid 28 in tank 12 will be detected by transducer 18. Since transducer 18 is measuring pressure head and not volume of liquid, changes in the level of liquid in either tank 12 or standpipe 14 resulting from temperature changes will not affect the output of the transducer 18. Also, since the top of the standpipe 14 is connected to the tank 12 above the level of the liquid 28 by hose 24, wind effects on the liquid in tank 12 will also be applied to the liquid in standpipe 14. Since the transducer 18 is measuring a difference in pressure, the wind effects will be cancelled out and not affect the output of transducer 18.

The following examples further illustrate the essential features of the apparatus and method of the present invention.

## EXAMPLES 1-4

The storage tank tests presented as Examples 1-4 demonstrate the utility of the leak detector of the present invention over a wide range of conditions using liquids of various volatilities. All tests were performed in accordance with the procedures decribed above. Test conditions and results are as follows:

TABLE

Above-Ground Storage Tank Leak Detection Tests

| Ex No | Test Liquid | Test Conditions | | | | | | |
|---|---|---|---|---|---|---|---|---|
| | | Liq. Height Feet (m) | Tank Dia. Feet (m) | Amb. Temp °F (°C) | Ambient Conditions | Test Dur. (Hrs) | Leak Rate Qt/Hr (l/hr) | Resol-ution |
| 1 | Heating Oil | 4.0 (1.2) | 27.0 (8.2) | 65 (18) | Sunny&Calm | 4.5 | N.D.[1,2] | 2 gal (7.5 l) |
| 2 | Heating Oil | 4.0 (1.2) | 27.0 (8.2) | 50 (10) | High Winds | 4.5 | N.D.[1] | 2 gal (7.5 l) |
| 3 | Gasoline | 4.0 (1.2) | 55.0 (16.8) | 47 (8) | High Winds | 4.0 | N.D.[1,2] | 10 gal (38 l) |
| 4 | Lube Oil | 3.8 (1.16) | 30.0 (9.2) | 59 (15) | Calm | 8.7 | 2.4 (2.7) | 1 qt (1 l) |

[1] N.D. = No leak detectable at indicated level of resolution.
[2] Slight product growth observed. (See discussion of test results).

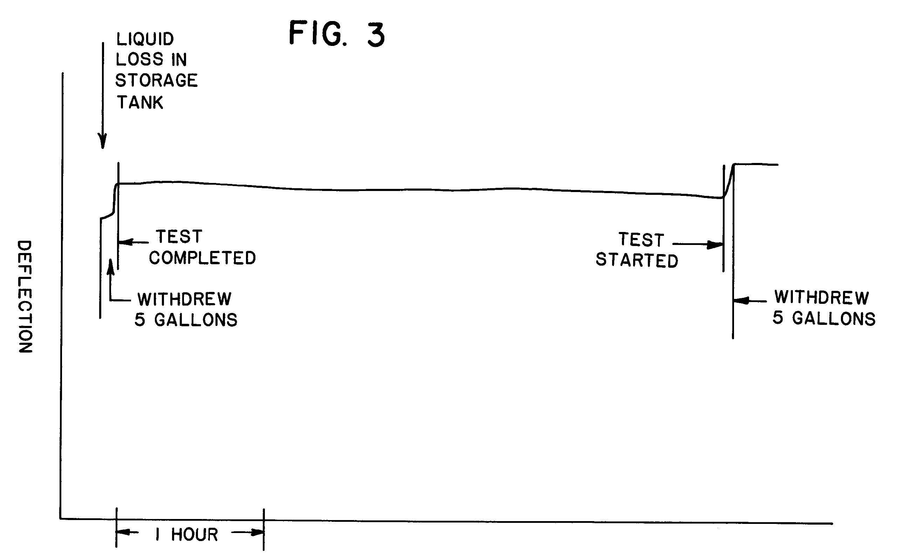

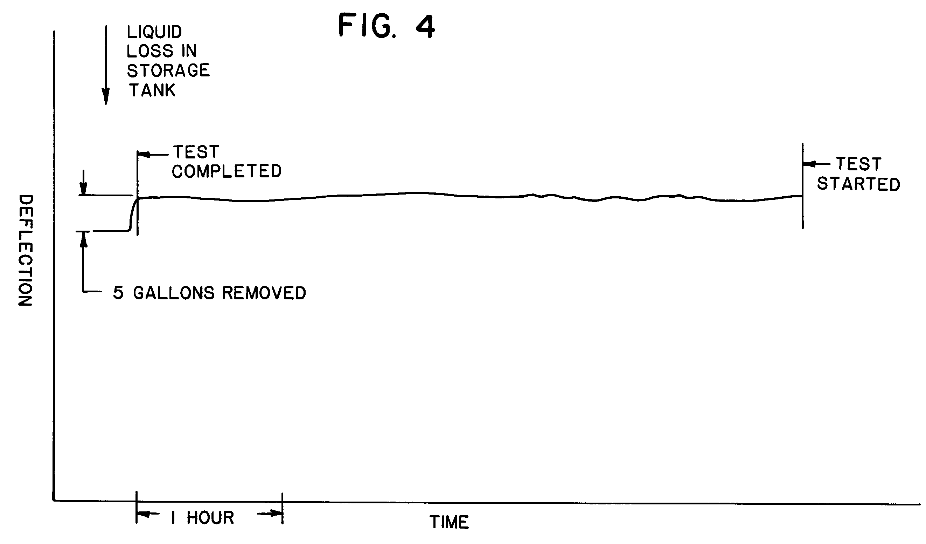

Figures 3 through 6 show the recordings made while conducting the tests of Examples 1 through 4; with Figure 3 corresponding to Example 1, Figure 4 to Example 2, etc. For the tests shown in Figures 3 and 4 (Examples 1 and 2), the tank used had a diameter of 27 feet (8.2m) and contained approximately 17,000 gallons (64,000 l) of Mobil No. 2 Heating Oil. Referring now to Figure 3, excellent test result resolution is demonstrated by the clear change in differential pressure resulting from the withdrawal of 5 gallons (19 l or 0.029% of total liquid in tank) from the storage tank at the beginning and end of the test. The slight increase in differential pressure with time (product growth on the order of less than 2 gallons or 7.5 l) is likely due to weepage of the valve which connects the storage tank to the rest of the tank farm and product pipeline. It should be noted that it is highly desirable to blank this valve off when performing a tank leak test to eliminate the problems associated with weepage of these large valves. Figure 4 presents the recorder output from the Example 2 test conducted using the same tank and product as used in Example 1. For this test, the tank-to-pipeline valve was blanked off and no product growth was detected during the test period. Also, the test of Example 2 was conducted on a day where high winds were experienced. As may be seen from Figure 4, the high winds, while perhaps responsible for an increase in chart undulations over those observed in the test of Example 1, did not decrease the ability of the apparatus of the present invention to resolve low level leakage. This is clear from the chart deflection which resulted from the removal of five gallons (19 l) at the end of the test period, versus the overall deflections (noise) incurred during the test.

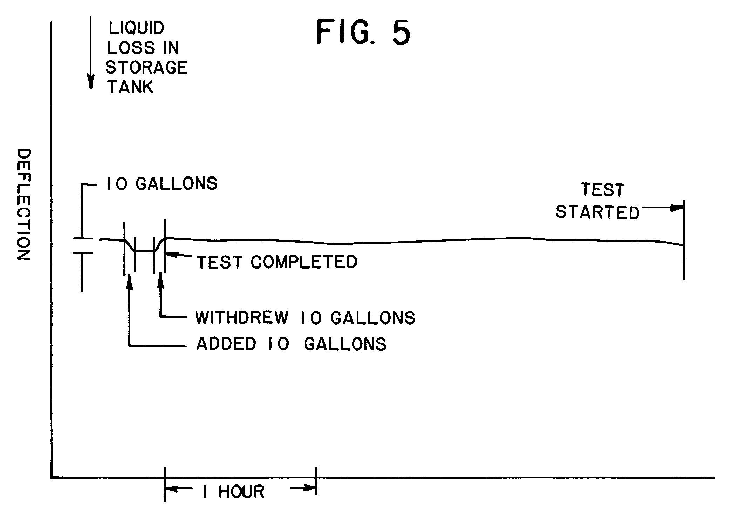

For the test shown in Figure 5 (Example 3) the tank used was 55 feet (16.8 m) in diameter and contained approximately 71,000 gallons (270,000 l) of Mobil Unleaded Gasoline. The test was conducted on a day on which high winds were experienced, using a tank which did not have the tank-to-pipeline valve blanked off. As indicated above, gasoline poses special problems in leak detection due to its highly volatile nature and high thermal expansion ratio. Additionally, gasoline vapors are heavier than air and tend to reside and exert a varying force on top of the liquid. Despite adverse conditions, excellent resolution was observed using the leak detector of the present invention. The removal and addition of ten gallons (38 l) of gasoline (0.014% of the total liquid volume) at the end of the test period was clearly discernable. The high winds experienced during the test produced no loss in ability to assess low level tank leakage.

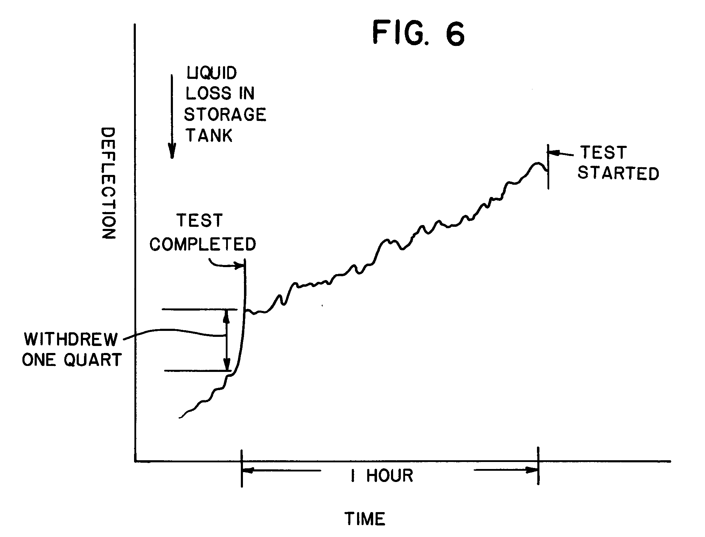

For the test of Example 4, a heated lube oil tank having a diameter of 30 feet (9.2 m) was used. The tank was filled to a level of 3.8 feet (1.2 m) with approximately 20,000 gallons (76,000 l) of Mobil 10-W-40 motor oil and heated to a temperature of 100°F. Referring now to Figure 6 for the recorder output corresponding to this test, it can be seen that a small leak was discovered using the leak detector of the present invention. As shown by the ability to resolve the removal of one quart (1 l) of liquid (0.0013% of total tank liquid volume) at the end of the test period, extremely accurate results were achieved. It should be noted that to conclude that the tank of Example 4 had a leak using the prior art sight glass method of leak detection would have required a test duration of nearly two full days (46 hours). This compares with the leak detector of the present invention which clearly determined both that the tank leaked and the magnitude of the leak in a one hour period.

Thus, there is provided by the present invention a method and apparatus for detecting leaks in above-ground liquid storage tanks which will accurately detect small leaks. The leak detector is not adversely affected by changes in ambient conditions, such as temperature, wind and the like, and is relatively inexpensive to manufacture, install and utilize. Excellent results have been demonstrated for tests conducted using very volatile liquids, such as gasoline, due to the design features described above and incorporated into the leak detector apparatus. Although the discussion of the apparatus has been restricted to its use with above-ground storage tanks, the device could be installed underground and utilized with underground storage tanks, as those skilled in the art will readily understand. Moreover, the apparatus of the present invention can also be used as part of, or in conjunction with, a storage tank inventory control system.

## Claims

1. An apparatus for detecting a change in the amount of liquid in a storage tank (12), comprising:
   (a) a vertical upright standpipe (14) for filling with a liquid to a level that generates a hydrostatic head pressure substantially equivalent to that exerted by the liquid in the storage tank (12);
   (b) means (18) for sensing hydrostatic head pressure differential between the liquid in the storage tank (12) and the liquid in the standpipe (14) to determine a change in the pressure differential resulting from a change in the amount of liquid in the storage tank (12);
   (c) means (20) for connecting said standpipe (14) to said pressure differential sensing means (18), said standpipe connecting means (20) being substantially horizontally disposed to said standpipe (14);
   (d) means (16) for connecting the storage tank (12) to said pressure differential sensing means (18), said storage tank connecting means (16) being substantially horizontally disposed to the storage tank (12); and
   (e) an elongated hollow member (24) connected above the liquid level of said standpipe (14) and adapted to be connected to the tank (12) above the level of the liquid in the tank (12);
   characterised in that said standpipe connecting means (20) and said tank connecting (16) means are in substantial axial alignment with each other.

2. The apparatus of claim 1, wherein the means (18) for sensing the hydrostatic head pressure differential between the liquid in the storage tank (12) and the liquid in the standpipe (14) is a pressure transducer (18) producing an electrical output signal proportional to the head pressure differential.

3. The apparatus of claim 1 or claim 2, wherein said elongated hollow member (24) is a flexible hose.

4. The apparatus of any preceding claim, wherein said standpipe connecting means (20) and said tank connecting means (16) are rigid hollow pipes.

5. The apparatus of claim 2, further comprising a recorder (32) operatively connected to said pressure transducer (18) for recording a signal functionally related to the output signal of said pressure transducer.

6. A method of detecting liquid leakage from an above-ground tank (12), comprising the steps of:
   (a) connecting a pressure sensing means (18) to the above-ground tank (12) using a tank connecting means (16) substantially horizontally disposed to the tank (12);
   (b) connecting a vertical upright standpipe (14) to the pressure sensing means (18) using a standpipe connecting means (20) substantially horizontally disposed to the standpipe (14);
   (c) filling the vertical upright standpipe (14) with a liquid to a level that generates a hydrostatic head pressure substantially equivalent to that exerted by the liquid in the storage tank (12);
   (d) connecting the top of the standpipe (14) to the tank (12) above the level of liquid in the tank (12) by way of an elongated hollow member (24); and
   (e) measuring the hydrostatic head pressure differential between the liquid in the storage tank (12) and the liquid in the standpipe (14) through the use of the pressure sensing means (18) to determine a change in the pressure differential caused by leakage of liquid from the tank (12),
       characterised in that the tanking connecting means (16) and the standpipe connecting means (20) are in substantial axial alignment with each other.

7. The method of claim 6, wherein in step (c), the liquid used to fill the standpipe (14) is different from the liquid present in the tank (12).

8. The method of claim 7, wherein in step (c), the liquid used to fill the standpipe (14) comprises water.


**Patentansprüche**

1. Vorrichtung zum Feststellen einer Veränderung in der Flüssigkeitsmenge eines Speicherbehälters (12), die folgendes umfaßt:
   (a) ein senkrecht stehendes Standrohr (14) zum Füllen mit einer Flüssigkeit auf ein Niveau, das einen hydrostatischen Kopfdruck erzeugt, der im wesentlichen dem von der Flüssigkeit im Speicherbehälter (12) hervorgerufenen Druck entspricht;
   (b) eine Einrichtung (18) zum Abtasten des hydrostatischen Kopfdruckunterschieds zwischen der Flüssigkeit im Speicherbehälter (12) und der Flüssigkeit im Standrohr (14), um eine Veränderung des Druckunterschieds aufgrund einer Veränderung der Flüssigkeitsmenge im Vorratsbehälter (12) festzustellen;
   (c) eine Einrichtung (20) zum Verbinden des Standrohrs (14) mit der Druckunterschieds-Abtasteinrichtung (18), wobei die Standrohr-Verbindungseinrichtung (20) im wesentlichen in horizontaler Richtung zum Standrohr (14) angeordnet ist;
   (d) eine Einrichtung (16) zum Verbinden des Vorratsbehälters (12) mit der Druckunterschieds-Abtasteinrichtung (18), wobei die Speicherbehälter-Verbindungseinrichtung (16) im wesentlichen in horizontaler Richtung zum Speicherbehälter (12) angeordnet ist; und
   (e) ein längliches hohles Element (24), das mit dem Standrohr (14) oberhalb des Flüssigkeitsniveaus des Standrohrs (14) verbunden ist und zur Verbindung mit dem Behälter (12) oberhalb des Flüssigkeitsniveaus im Behälter (12) befähigt ist;
       dadurch gekennzeichnet, daß die Standrohr-Verbindungseinrichtung (20) und die Behälter-Verbindungseinrichtung (16) zueinander im wesentlichen axial ausgerichtet sind.

2. Vorrichtung nach Anspruch 1, wobei die Einrichtung (18) zum Abtasten des hydrostatischen Druckunterschieds zwischen der Flüssigkeit im Speicherbehälter (12) und der Flüssigkeit im Standrohr (14) ein Druckmeßwertwandler (18) ist, der ein elektrisches Ausgangssignal liefert, das proportional zum Druckunterschied ist.

3. Vorrichtung nach Anspruch 1 oder 2, wobei es sich beim länglichen hohlen Element (26) um einen flexiblen Schlauch handelt.

4. Vorrichtung nach einem der vorstehenden Ansprüche, wobei es sich bei der Standrohr-Verbindungseinrichtung (20) und der Behälter-Verbindungseinrichtung (16) um starre hohle Rohre handelt.

5. Vorrichtung nach Anspruch 2, ferner umfassend eine Aufzeichnungsvorrichtung (32), die operativ mit dem Druckmeßwertwandler (18) zum Aufzeichnen eines Signals, das funktionell mit dem Ausgangssignal des Druckmeßwertwandlers in Beziehung steht, verbunden ist.

6. Verfahren zum Feststellen eines Flüssigkeitslecks in einem oberirdischen Behälter (12), das folgende Stufen umfaßt:

(a) Verbinden einer Druck-Abtasteinrichtung (18) mit dem oberirdischen Behälter (12) unter Verwendung einer im wesentlichen horizontal zum Behälter (12) angeordneten Behälter-Verbindungseinrichtung (16);

(b) Verbinden eines senkrecht stehenden Standrohrs (14) mit der Druck-Abtasteinrichtung (18) unter Verwendung einer zum Standrohr (14) im wesentlichen horizontal angeordneten Standrohr-Verbindungseinrichtung (20);

(c) Füllen des senkrecht stehenden Standrohrs (14) mit einer Flüssigkeit auf ein Niveau, das einen hydrostatischen Kopfdruck erzeugt, der im wesentlichen dem von der Flüssigkeit im Vorratsbehälter (12) ausgeübten Druck entspricht;

(d) Verbinden des Kopfes des Standrohrs (14) mit dem Behälter (12) oberhalb des Flüssigkeitsniveaus im Behälter (12) mittels eines länglichen hohlen Elements (24); und

(e) Messen des hydrostatischen Kopfdruckunterschieds zwischen der Flüssigkeit im Vorratsbehälter (12) und der Flüssigkeit im Standrohr (14) unter Verwendung der Druck-Abtasteinrichtung (18) zur Feststellung eines durch eine Flüssigkeitsleckage im Behälter (12) hervorgerufenen Druckunterschieds, dadurch gekennzeichnet, daß die Behälter-Verbindungseinrichtung (16) und die Standrohr-Verbindungseinrichtung (20) zueinander im wesentlichen axial ausgerichtet sind.

7. Verfahren nach Anspruch 6, wobei in Stufe (c) die zum Füllen des Standrohrs (14) verwendete Flüssigkeit sich von der im Behälter (12) vorhandenen Flüssigkeit unterscheidet.

8. Verfahren nach Anspruch 7, wobei in Stufe (c) die zum Füllen des Standrohrs (14) verwendete Flüssigkeit Wasser enthält.

**Revendications**

1. Un appareil pour détecter un changement dans la quantité de liquide d'un réservoir de stockage (12) comprenant:

(a) une colonne montante verticale (14) pour le remplissage avec un liquide jusqu'à un niveau produisant une pression de charge hydrostatique équivalente à celle exercée par le liquide dans le réservoir de stockage (12);

(b) des moyens (18) pour détecter la pression différentielle de la charge hydrostatique entre le liquide dans le réservoir de stockage (12) et le liquide dans la colonne montante (14) pour déterminer un changement de pression différentielle résultant d'un changement de la quantité de liquide dans le réservoir de stockage (12);

(c) des moyens (20) pour relier ladite colonne montante (14) auxdits moyens de détection de pression différentielle (18), lesdits moyens de raccordement de la colonne montante (20) étant disposés sensiblement horizontalement par rapport à ladite colonne montante (14);

(d) des moyens (16) pour relier le réservoir de stockage (12) auxdits moyens de détection de pression différentielle (18), lesdits moyens de raccordement de réservoir de stockage (16) étant disposés sensiblement horizontalement par rapport audit réservoir de stockage (12); et

(e) un élément creux allongé (24) raccordé au dessus du niveau de liquide de ladite colonne montante (14) et adapté pour être relié au réservoir (12) au dessus du niveau de liquide dans le réservoir (12); caractérisé en ce que les moyens de raccordement de colonne montante (20) et lesdits moyens de raccordement de réservoir (16) sont sensiblement en alignement axial l'un par rapport à l'autre.

2. L'appareil selon la revendication 1, dans lequel les moyens (18) de détection de la pression différentielle de charge hydrostatique entre le liquide dans le réservoir de stockage (12) et le liquide dans la colonne montante (14) est un transducteur de pression (18) émettant un signal de sortie électrique proportionnel à la pression différentielle de la charge.

3. L'appareil selon la revendication 1 ou 2, dans lequel ledit élément creux allongé (24) est un tuyau souple.

4. L'appareil selon l'une quelconque des précédentes revendications, dans lequel lesdits moyens de raccordement de colonne montante (20) et lesdits moyens de raccordement de réservoir (16) sont des tuyaux creux rigides.

5. L'appareil selon la revendication 2, comprenant en outre un enregistreur (32) relié activement audit transducteur de pression (18) pour enregistrer un signal asservi au signal de sortie dudit transducteur de pression.

6. Un procédé de détection de fuites de liquide d'un réservoir en surface (12) comprenant les étapes de:
   (a) raccordement de moyens de détection de pression (18) au réservoir en surface (12) utilisant des moyens de raccordement de réservoir (16) disposés sensiblement horizontalement par rapport au réservoir (12);
   (b) raccordement d'une colonne montante verticale (14) à des moyens de détection de pression (18) utilisant des moyens de raccordement de colonne montante (20) disposés sensiblement horizontalement par rapport à la colonne montante (14);
   (c) remplissage de liquide de la colonne montante verticale (14) jusqu'à un niveau produisant une pression de charge hydrostatique sensiblement équivalente à celle exercée par le liquide dans le réservoir de stockage (12);
   (d) raccordement du haut de la colonne montante (14) au réservoir (12) au dessus du niveau de liquide dans le réservoir (12) au moyen d'un élément creux allongé (24); et
   (e) mesure de la pression différentielle de charge hydrostatique entre le liquide dans le réservoir de stockage (12) et le liquide dans la colonne montante (14) grâce à l'utilisation de moyens de détection de pression (18) pour déterminer un changement de pression différentielle provoqué par une fuite de liquide du réservoir (12),
   
   caractérisé en ce que les moyens de raccordement de réservoir (16) et les moyens de raccordement de colonne montante (20) sont sensiblement en alignement axial l'un par rapport à l'autre.

7. Le procédé selon la revendication 6 dans lequel, à l'étape (c), le liquide utilisé pour remplir la colonne montante (14) est différent du liquide présent dans le réservoir (12)

8. Le procédé selon la revendication 7 dans lequel, à l'étape (c), le liquide utilisé pour remplir la colonne montante (14) comprend de l'eau.

# FIG. 1

# FIG. 2

PRESSURE TRANSDUCER — 18

TRANSDUCER INDICATOR — 60

DAMPENING FACTOR SWITCH — 66

DAMPENING CIRCUIT — 62

TANK DIAMETER SELECTOR SWITCH — 68

LEAKAGE VOLUME CALCULATOR CIRCUIT — 64

DIGITAL DISPLAY — 70

RECORDER — 32

SIGNAL PROCESSOR

30

11

EP 0 411 802 B1

FIG. 3

LIQUID LOSS IN STORAGE TANK

DEFLECTION

TEST COMPLETED

WITHDREW 5 GALLONS

TEST STARTED

WITHDREW 5 GALLONS

1 HOUR

EP 0 411 802 B1

## FIG. 4

EP 0 411 802 B1

# FIG. 5

LIQUID LOSS IN STORAGE TANK

DEFLECTION

TEST STARTED

TEST COMPLETED

10 GALLONS

WITHDREW 10 GALLONS

ADDED 10 GALLONS

1 HOUR

14

# FIG. 6

DEFLECTION

LIQUID LOSS IN STORAGE TANK

TEST COMPLETED

WITHDREW ONE QUART

TEST STARTED

I HOUR

TIME

EP 0 411 802 B1